Europäisches Patentamt

European Patent Office

Office européen des brevets

(19)

(11) Publication number: **0 396 792**
A1

# (12) EUROPEAN PATENT APPLICATION

(21) Application number: **89108296.8**

(22) Date of filing: **09.05.89**

(51) Int. Cl.⁵: **H05B 37/02, G01J 1/18**

(43) Date of publication of application:
**14.11.90 Bulletin 90/46**

(84) Designated Contracting States:
**DE FR GB NL SE**

(71) Applicant: **RENCOTUOTE OY**
**Mestarintie 20-22**
**SF-06100 Porvoo(FI)**

(72) Inventor: **Sanmark, Krister**
**Punahilkantie 8 A 5**
**SF-00820 Helsinki(FI)**
Inventor: **Heikkinen, Eero**
**Jämeräntaival 5 C 364**
**SF-02150 Espoo(FI)**

(74) Representative: **Weitzel, Wolfgang, Dr.-Ing.**
**St. Pöltener Strasse 43**
**D-7920 Heidenheim(DE)**

(54) **Procedure and apparatus for the calibration of a photoelectric switch used in a flasher.**

(57) Procedure and apparatus for the calibration of a photoelectric switch used in a flasher, in which procedure the luminous intensity is measured in a place having a known luminous intensity value, whereupon the luminous intensity value thus measured is stored in memory (2).

## PROCEDURE AND APPARATUS FOR THE CALIBRATION OF A PHOTOELECTRIC SWITCH USED IN A FLASHER

The present invention relates to a procedure and an apparatus for the calibration of a photoelectric switch used in a flasher.

The flashers currently used e.g. in navigation are provided with a photoresistor and, in series with it, a variable resistor for calibration. The use of a variable resistor for the calibration of the photoresistor involves a degree of inaccuracy. Moreover, as the photocell is inside the flasher, the flasher housing must be provided with a hole for calibration. E.g. the flashers used in navigation must have a watertight housing construction. Making a watertight calibration hole is difficult.

The object of the present invention is to eliminate the drawbacks referred to above. The procedure of the invention for the calibration of a photoelectric switch used in a flasher is characterized in that the luminous intensity is measured in a place having a known luminous intensity value, and that the luminous intensity value thus measured is stored in memory.

A preferred embodiment of the procedure of the invention is characterized in that the luminous intensity value stored in memory is adjustable.

The apparatus designed for implementing the procedure of the invention for the calibration of a photoelectric switch used in a flasher is characterized in that the apparatus is provided with a microprocessor which measures the luminous intensity in a place having a known luminous intensity value and stores the luminous intensity value thus measured in memory.

A preferred embodiment of the apparatus designed for implementing the procedure of the invention is characterized in that the microprocessor has a memory permitting adjustment of the luminous intensity value stored in it.

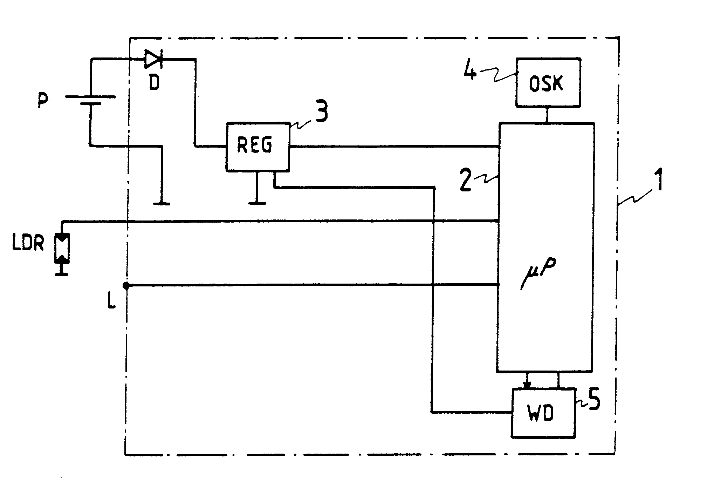

In the following, the invention is described by the aid of an example with reference to the drawing attached, representing the apparatus for the calibration of a photoelectric switch used in a flasher.

The figure shows the apparatus for the calibration of a photoelectric switch of a flasher, used e.g. in navigation. The apparatus comprises a photoresistor LDR, a calibration unit 1 and a battery P acting as the voltage source of the calibration unit. In the measurement of the luminous intensity, the device uses a photoresistor LDR, with which, in order to calibrate the unit measuring the luminous intensity, the luminous intensity is measured in a cell whose precise luminous intensity value is known. Instead of a photoresistor, it is possible to use a photodiode or some other type of photosensitive component. If the luminous intensity limit for the activation/deactivation of the flasher is e.g. 100 lux, then, for calibration, the luminous intensity is measured in a cell in which the luminous intensity has exactly this value. After that, the luminous intensity value thus measured is stored e.g. in a microcomputer, from where the stored values can be further transferred to the memory of the calibration unit 1.

The calibration unit 1 has a microprocessor ($\mu$P) 2, e.g. Motorola 68HC11, which uses a crystal as an oscillator (OSK) 4, which may be placed inside the processor. The microprocessor is fed by the battery P via a diode D and a voltage regulator (REG) 3, which adjusts the voltage fed into the microprocessor 2 to 5 V. In addition, the processor is supervised by a calibration circuit (WD) 5, which is also fed by a voltage obtained from the regulator 3. The memory of the calibration unit 1 thus consists of the memory of the microprocessor 2, in which the reference values are stored. The values are entered into the processor's memory via the connector L.

Several calibrated luminous intensity values can be stored in the microcomputer. A new value is automatically stored in the memory of the microprocessor 2 by connecting a programming device to the connector L and entering the new value.

It is obvious to a person skilled in the art that different embodiments of the invention are not restricted to the example described above, but that they may instead be varied within the scope of the following claims.

## Claims

1. Procedure for the calibration of a photoelectric switch used in a flasher, **characterized** in that the luminous intensity is measured in a place having a known luminous intensity value and that the luminous intensity value thus measured is stored in memory (2).

2. Procedure according to claim 1, **characterized** in that the luminous intensity value stored in memory (2) adjustable.

3. Apparatus designed for implementing the procedure of the invention for the calibration of a photoelectric switch used in a flasher, **characterized** in that the apparatus is provided with a microprocessor (2) which measures the luminous intensity in a place having a known luminous intensity value and stores the luminous intensity value thus measured in memory.

4. Apparatus according to claim 3, **character-**

**ized** in that the microprocessor has a memory permitting adjustment of the luminous intensity value stored in it.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2227127 (MARX) <br> * the whole document * | 1 | H05B37/02 <br> G01J1/18 |
| A | DE-A-1804319 (GANTENBRINK) <br> * page 1, line 1 - page 3, line 14; figures 1, 2 * | 1 | |
| A | US-A-3379892 (NEAGLE & AL.) <br> * column 1, line 19 - column 1, line 58; figure 1 * | 1 | |
| A | WO-A-8605351 (STIFTELSEN) <br> * abstract; figure 4 * | 1 | |
| A | US-A-4389632 (SEIDLER) <br> * abstract; figure 2 * | 3 | |

|  |  |  | TECHNICAL FIELDS SEARCHED (Int. Cl.5 ) |
|---|---|---|---|
|  |  |  | H05B <br> G01J |

The present search report has been drawn up for all claims

| Place of search | Date of completion of the search | Examiner |
|---|---|---|
| THE HAGUE | 11 JANUARY 1990 | SPEISER P. |